# EUROPÄISCHE PATENTSCHRIFT

(11) **EP 3 405 810 B1**
(45) Veröffentlichungstag und Bekanntmachung des Hinweises auf die Patenterteilung: **01.01.2025**
(21) Anmeldenummer: 17700150.0
(22) Anmeldetag: 02.01.2017
(51) Int. Cl.: G01S 7/481, G01S 17/42, G01S 17/931, B60Q 1/00, B60Q 1/04

(54) **SCHEINWERFERMODUL, SCHEINWERFER, SCHEINWERFERSYSTEM UND BETRIEBSVERFAHREN FÜR EIN SCHEINWERFERMODUL**
HEADLIGHT MODULE, HEADLIGHT, HEADLIGHT SYSTEM, AND OPERATING METHOD FOR A HEADLIGHT MODULE
MODULE DE PHARE, PHARE, SYSTÈME DE PHARE, ET PROCÉDÉ POUR FAIRE FONCTIONNER UN MODULE DE PHARE

(30) Priorität: 20.01.2016 DE 102016200653
(43) Veröffentlichungstag der Anmeldung: 28.11.2018
(73) Patentinhaber: Robert Bosch GmbH, 70442 Stuttgart (DE)
(72) Erfinder: SEITZ, Mihel, 72800 Eningen Unter Achalm (DE); ROJAHN, Martin, 72070 Tuebingen (DE)
(86) Internationale Anmeldenummer: PCT/EP2017/050029
(87) Internationale Veröffentlichungsnummer: WO 2017/125256

(56) Entgegenhaltungen:
- EP-A1- 2 767 850
- WO-A1-2008/154736
- DE-A1- 102013 002 682
- DE-A1- 102013 016 276
- DE-A1- 102013 016 277

## Beschreibung

Die vorliegende Erfindung betrifft ein Scheinwerfermodul für einen Scheinwerfer eines Fahrzeugs, einen Scheinwerfer für ein Fahrzeug, ein Scheinwerfersystem für ein Fahrzeug und ein Betriebsverfahren für ein Scheinwerfermodul.

### Stand der Technik

Bei modernen Kraftfahrzeugen finden LiDAR-Systeme zahlreiche Einsatzmöglichkeiten, etwa bei der Geschwindigkeitsmessung von weiteren Verkehrsteilnehmern, bei der Erkennung von Hindernissen, zur Verwendung bei Einparkassistenten oder zur Detektion von Fahrbahnoberflächen. So ist etwa aus der WO 2010000751 A1 ein Verfahren zur Messung von Geschwindigkeiten bekannt. Die LiDAR-Systeme bilden hierbei eigene Module, welche in dem Fahrzeug angeordnet werden. Weiter ist aus der WO 2008/154736 A1 ein Scheinwerfersystem bekannt. Die DE 10 2013 016277 A1 betrifft einen laserbasierten Scheinwerfer.

### Offenbarung der Erfindung

Die Erfindung schafft ein Scheinwerfermodul für einen Scheinwerfer eines Fahrzeugs mit den Merkmalen des Patentanspruchs 1, einen Scheinwerfer für ein Fahrzeug mit den Merkmalen des Patentanspruchs 5, ein Scheinwerfersystem für ein Fahrzeug mit den Merkmalen des Patentanspruchs 6, und ein Betriebsverfahren für ein Scheinwerfermodul mit den Merkmalen des Patentanspruchs 8.

Die Erfindung schafft demnach ein Scheinwerfermodul für einen Scheinwerfer eines Fahrzeugs, welches dazu ausgelegt ist, ein zumindest teilweise im sichtbaren Spektrum liegendes Licht in mindestens einen Teilbereich einer Fahrzeugumgebung des Fahrzeugs zu emittieren, wobei das Scheinwerfermodul eine Lichtdetektionseinrichtung umfasst, welche dazu ausgelegt ist, mindestens eine Größe bezüglich einer räumlichen und/oder zeitlichen Intensitätsverteilung und/oder einer Wellenlängenverteilung einer auf das Scheinwerfermodul auftreffenden Reflexion zumindest eines Teils des emittierten Lichts zu ermitteln und unter Berücksichtigung der mindestens einen ermittelten Größe eine Information bezüglich der Fahrzeugumgebung zu ermitteln.

Weiter schafft die Erfindung einen Scheinwerfer für ein Fahrzeug, mit mindestens einem Scheinwerfermodul.

Weiter schafft die Erfindung ein Scheinwerfersystem für ein Fahrzeug, mit mindestens einem Scheinwerfer und einer Steuereinrichtung, welche ausgebildet ist, den mindestens einen Scheinwerfer zu steuern.

Schließlich schafft die Erfindung ein Betriebsverfahren für ein Scheinwerfermodul, mit einem ersten Verfahrensschritt des Emittierens eines zumindest teilweise im sichtbaren Spektrum liegenden Lichts in mindestens einen Teilbereich einer Fahrzeugumgebung des Fahrzeugs durch das Scheinwerfermodul. Ein zweiter Verfahrensschritt umfasst das Ermitteln mindestens einer Größe bezüglich einer räumlichen und/oder zeitlichen Intensitätsverteilung und/oder einer Wellenlängenverteilung einer auf das Scheinwerfermodul auftreffenden Reflexion zumindest eines Teils des emittierten Lichts. Ein dritter Verfahrensschritt umfasst das Ermitteln einer Information bezüglich der Fahrzeugumgebung unter Berücksichtigung der mindestens einen ermittelten Größe.

Bevorzugte Weiterbildungen sind Gegenstand der jeweiligen Unteransprüche.

### Vorteile der Erfindung

Die Erfindung stellt ein sehr kompaktes Scheinwerfermodul bereit, welches einerseits als Fahrzeuglicht zur Beleuchtung einer Fahrzeugumgebung ausgebildet ist und andererseits eine Lichtdetektionseinrichtung umfasst, wodurch das Scheinwerfermodul gleichzeitig beispielsweise als LiDAR-System verwendet werden kann.

Erfindungsgemäß umfasst das Scheinwerfermodul mindestens eine Laserlichtquelle, eine erste Abrastereinrichtung und eine Konvertiereinrichtung, wobei von der mindestens einen Laserlichtquelle emittiertes Laserlicht mit mindestens einer Ausgangswellenlänge auf die erste Abrastereinrichtung oder auf die Konvertiereinrichtung fällt, und das von dem Scheinwerfermodul in den mindestens einen Teilbereich der Fahrzeugumgebung emittierte Licht ein mittels der ersten Abrastereinrichtung abgelenktes erstes Licht und ein mittels der Konvertiereinrichtung spektral gestreutes zweites Licht mit mindestens einer von der Ausgangswellenlänge abweichenden Wellenlänge umfasst. Das Scheinwerfermodul ist somit dazu ausgelegt, den mindestens einen Teilbereich der Fahrzeugumgebung mit dem ersten Licht, das heißt mit Laserlicht, abzurastern und gleichzeitig mit dem zweiten Licht zumindest teilweise zu beleuchten. Somit ist ein besonders vorteilhafter und kompakter Aufbau möglich, da ein LiDAR-System, umfassend das Aussenden des ersten Lichts und das Auswerten durch die Lichtdetektionseinrichtung, mit einer Beleuchtung einer Fahrzeugumgebung durch das zweite Licht kombiniert werden.

Erfindungsgemäß umfasst das Scheinwerfermodul nur die eine Laserlichtquelle, deren Laserlicht zumindest teilweise mittels eines Strahlteilers als erster Teilstahl auf die erste Abrastereinrichtung und als zweiter Teilstrahl auf die Konvertiereinrichtung gerichtet ist.

Gemäß einer bevorzugten Weiterbildung des Scheinwerfermoduls ist die erste Abrastereinrichtung dazu ausgelegt, einen ersten Raumwinkelbereich als mindestens einen Teilbereich der Fahrzeugumgebung mit dem ersten Licht abzurastern.

Gemäß einer bevorzugten Weiterbildung umfasst das Scheinwerfermodul eine zweite Abrastereinrichtung, auf welche das mittels der Konvertiereinrichtung spektral gestreute zweite Licht trifft und mittels welcher ein zweiter Raumwinkelbereich mit dem spektral gestreuten zweiten Licht abrasterbar ist. Somit kann sowohl das erste als auch das zweite Licht gerastert ausgesendet werden. Dadurch wird der Energieverbrauch des Scheinwerfermoduls gegenüber einem kontinuierlichen Aussenden in einen Raumwinkelbereich reduziert. Weiter kann vermieden werden, dass Gegenverkehr geblendet wird.

Gemäß einer bevorzugten Weiterbildung des Scheinwerfermoduls ist der erste Raumwinkelbereich größer als der zweite Raumwinkelbereich. Mittels des ersten Lichts kann der erste Raumwinkelbereich abgerastert und ausgewertet werden, während andererseits ein kleinerer Raumwinkelbereich durch das zweite Licht ausgeleuchtet wird. Insbesondere wird aufgrund des größeren ersten Raumwinkelbereiches ein breiter Bereich der Fahrzeugumgebung überwacht, welcher selbst solche Bereiche umfasst, welche nicht mit Fahrzeuglicht bestrahlt werden, um beispielsweise Gegenverkehr nicht zu blenden.

Gemäß einer bevorzugten Weiterbildung des Scheinwerfersystems ist eine erste Teilmenge der Scheinwerfermodule des mindestens einen Scheinwerfers dazu ausgelegt, anhand von den von Lichtdetektionseinrichtungen einer zweiten Teilmenge der Scheinwerfermodule des mindestens einen Schweinwerfers ermittelten Größen einen dritten Raumwinkelbereich als mindestens einen Teilbereich der Fahrzeugumgebung mit mindestens einem ersten Licht der Scheinwerfermodule der ersten Teilmenge abzurastern.

### Kurze Beschreibung der Zeichnungen

Es zeigen:
- Fig. 1: eine schematische Ansicht eines Scheinwerfermoduls gemäß einer Ausführungsform der vorliegenden Erfindung;
- Fig. 2, 3, 4: schematische Schnittansichten von Lichtaussendeeinrichtungen gemäß Ausführungsformen der vorliegenden Erfindung;
- Fig. 5: eine schematische Ansicht eines Scheinwerfers gemäß einer Ausführungsform der vorliegenden Erfindung;
- Fig. 6: ein Blockschaltbild eines Scheinwerfersystems gemäß einer Ausführungsform der vorliegenden Erfindung; und
- Fig. 7: ein Flussdiagramm zur Erläuterung eines Betriebsverfahrens für ein Scheinwerfermodul gemäß einer Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

### Beschreibung der Ausführungsbeispiele

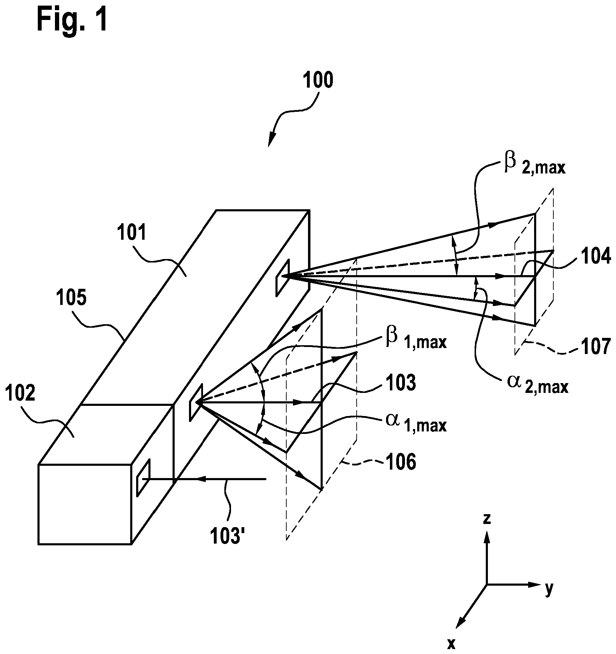

Fig. 1 zeigt eine schematische Ansicht eines Scheinwerfermoduls 100 für einen Scheinwerfer eines Fahrzeugs. Das Scheinwerfermodul 100 umfasst eine Lichtaussendeeinrichtung 101 mit einem optionalen Gehäuse 105, welche dazu ausgelegt ist, ein erstes Licht 103 und ein zweites Licht 104 in eine Fahrzeugumgebung des Fahrzeugs zu emittieren. Das erste Licht 103 kann hierbei durch die Lichtaussendeeinrichtung 101 um einen ersten horizontalen Winkel α₁ in einer horizontalen x-y-Ebene und einen ersten vertikalen Winkel β₁ in einer vertikalen y-z-Richtung ausgelenkt werden. Die horizontale x-y-Ebene ist hierbei beim Fahren des Fahrzeugs auf einem Untergrund parallel zu diesem Untergrund. Das erste Licht 103 kann somit durch die Lichtaussendeeinrichtung 101 in einen ersten Raumwinkelbereich 106 ausgesendet werden, welcher sich jeweils bis zu einem maximalen ersten horizontalen Winkel α_{1,max} und einem maximalen ersten vertikalen Winkel β_{1,max} erstreckt.

Analog kann das zweite Licht 104 durch in der x-y-Ebene um einen zweiten horizontalen Winkel α₂ und in der y-z-Ebene um einen zweiten vertikalen Winkel β₂ ausgelenkt werden. Das zweite Licht 104 kann in einen zweiten Raumwinkelbereich 107 ausgesendet werden, welcher sich bis zu einem maximalen zweiten horizontalen Winkel α_{2,max} und einem maximalen zweiten vertikalen Winkel β_{2,max} erstreckt. Vorzugsweise ist hierbei der erste Raumwinkelbereich 106 größer als der zweite Raumwinkelbereich 107.

Weiter umfasst das Scheinwerfermodul 100 eine Lichtdetektionseinrichtung 102, welche ausgelegt ist, ein reflektiertes Licht 103' als Reflexion von mindestens einem Teil des emittierten ersten Lichts 103 zu empfangen und mindestens eine Größe bezüglich einer räumlichen und/oder zeitlichen Intensitätsverteilung und/oder einer Wellenlängenverteilung des reflektierten Lichts 103' zu ermitteln. Die Lichtdetektionseinrichtung 102 ist weiter ausgebildet, unter Berücksichtigung der ermittelten Größe eine Information bezüglich der Fahrzeugumgebung des Fahrzeugs zu ermitteln. Insbesondere kann die Lichtdetektionseinrichtung 102 ausgebildet sein, weitere Verkehrsteilnehmer oder Hindernisse in der Fahrzeugumgebung zu detektieren, oder eine Straßenbeschaffenheit sowie relative Geschwindigkeiten des Fahrzeugs zu weiteren Objekten zu bestimmen. Die Lichtdetektionseinrichtung 102 bildet zusammen mit einem das erste Licht 103 aussendenden Element der Lichtaussendeeinrichtung 101 ein Li DAR-System.

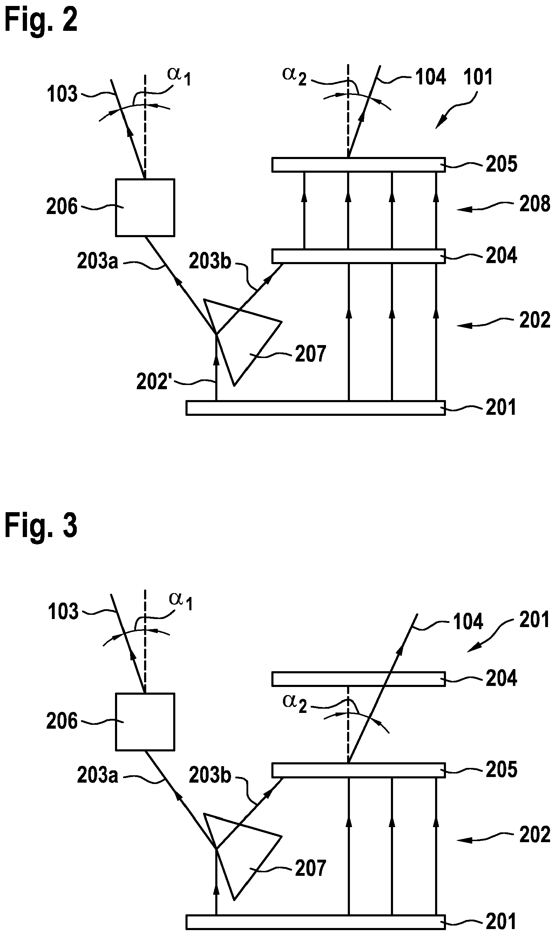

In Fig. 2 ist eine Lichtaussendeeinrichtung 101 gemäß einer ersten Ausführungsform der vorliegenden Erfindung illustriert. Die Lichtaussendeeinrichtung 101 umfasst hierbei eine Laserlichtquelle 201, beispielsweise einen GaN-Laserchip, welcher zum Aussenden eines Laserlichts 202 mit einer Ausgangswellenlänge ausgebildet ist. Das ausgesendete Laserlicht 202 trifft teilweise auf eine Konvertiereinrichtung 204, welche dazu eingerichtet ist, das ausgesendete Laserlicht 202 spektral zu streuen. Die Konvertiereinrichtung 204 kann beispielsweise ein Phosphorschirm sein. Die Konvertiereinrichtung 204 dient als Weißlichtwandler, das heißt, das emittierte Laserlicht 202 mit einer Ausgangswellenlänge wird in ein konvertiertes Licht 208 mit einem kontinuierlichen, zumindest teilweise im sichtbaren Bereich liegenden Spektrum umgewandelt.

In einem Teil des Strahlengangs des emittierten Lichts 202 befindet sich weiter ein Strahlteiler 207, und zwar ein Prisma. Der Strahlteiler 207 ist derart angeordnet, dass ein Teil 202' des emittierten Lichts 202 auf den Strahlteiler 207 trifft und in ein erstes Teillicht 203a und ein zweites Teillicht 203b geteilt wird. Das zweite Teillicht 203b trifft ebenfalls auf die Konvertiereinrichtung 204 und wird in konvertiertes Licht 208 umgewandelt. Das erste Teillicht 203a trifft auf eine erste Abrastereinrichtung 206 und wird abgelenkt und als das erste Licht 103 ausgesendet und somit der erste Raumwinkelbereich 106 abgerastert. Die Abrastereinrichtung 206 kann insbesondere einen Mikrospiegel umfassen, welcher vorzugsweise den ersten Raumwinkelbereich 106 in diskreten Stufen abrastert.

Das konvertierte Licht 208 wird durch eine zweite Abrastereinrichtung 205, insbesondere einen Mikrospiegel, abgelenkt und somit als das zweite Licht 104 ausgesendet und der zweite Raumwinkelbereich 107 abgerastert.

Durch eine geeignete Positionierung des Strahlteilers 207 kann das Verhältnis von einer Intensität des ersten Lichts 103 zu einer Intensität des zweiten Lichts 104 eingestellt werden. Vorzugsweise liegt die Intensität des ersten Lichts 103 zwischen einem und zehn Prozent der Intensität des zweiten Lichts 104. Wird das zweite Licht 104 zur Beleuchtung der Fahrzeugumgebung verwendet und das erste Licht 103 als Laserlicht für ein LiDAR-System, so kann verhindert werden, dass weitere Verkehrsteilnehmer durch eine zu hohe Intensität des für das LiDAR-System verwendeten ersten Lichts 103 geblendet werden.

In Fig. 3 ist eine Lichtaussendeeinrichtung 201 gemäß einer zweiten Ausführungsform der vorliegenden Erfindung illustriert. Im Gegensatz zur ersten Ausführungsform ist hierbei die Reihenfolge von Konvertiereinrichtung 204 und erster Abrastereinrichtung 205 vertauscht, so dass emittiertes Licht 202 bzw. zweites Teillicht 203b zuerst auf die Abrastereinrichtung 205 trifft und dann auf die Konvertiereinrichtung 204.

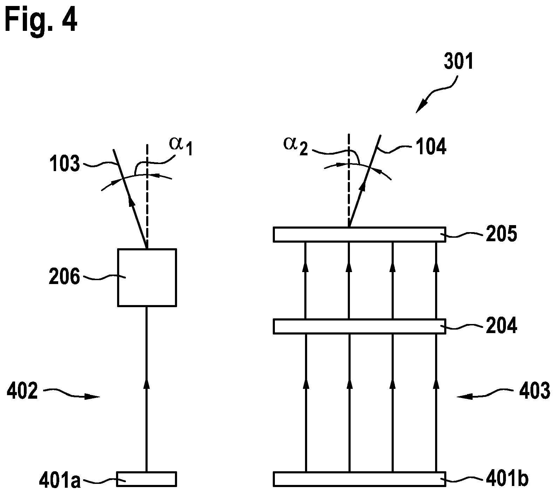

In Fig. 4 ist eine Lichtaussendeeinrichtung 301 gemäß einer dritten Ausführungsform der vorliegenden Erfindung illustriert. Die Lichtaussendeeinrichtung 301 umfasst hierbei eine erste Laserlichtquelle 401a und eine zweite Laserlichtquelle 401b. Von der ersten Laserlichtquelle 401a emittiertes erstes Laserlicht 402 wird analog zu den oben beschriebenen Ausführungsformen von einer ersten Abrastereinrichtung 206 abgelenkt und als erstes Licht 103 emittiert. Von der zweiten Laserlichtquelle 401b emittiertes zweites Laserlicht 403 wird von einer Konvertiereinrichtung 204 konvertiert und von der zweiten Abrastereinrichtung 205 abgelenkt und als zweites Licht 104 emittiert.

Die Erfindung ist nicht hierauf beschränkt. So kann wiederum die Reihenfolge von Konvertiereinrichtung 204 und zweiter Abrastereinrichtung 205 vertauscht sein.

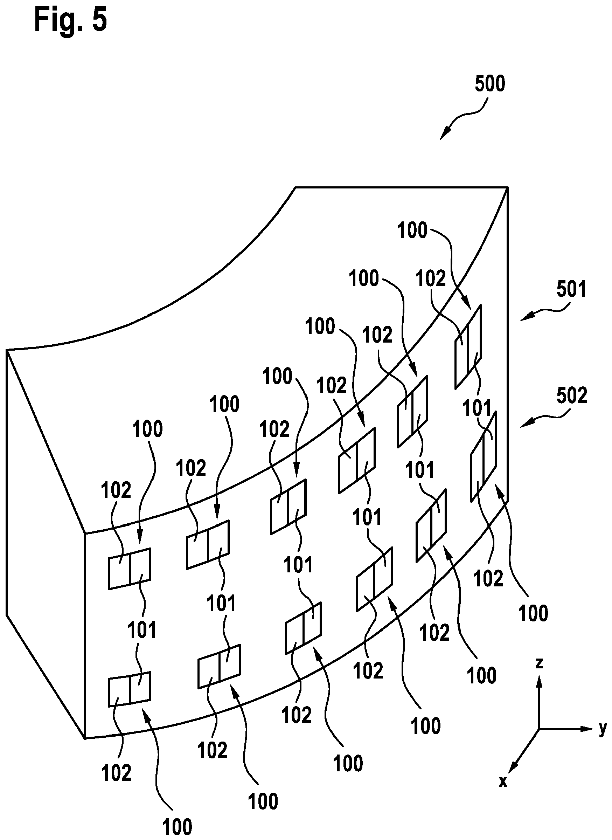

In Fig. 5 ist ein Scheinwerfer 500 für ein Fahrzeug illustriert. Der Scheinwerfer 500 weist eine obere Reihe 501 und eine untere Reihe 502 von Scheinwerfermodulen 100 auf. Die obere bzw. untere Reihe 501 bzw. 502 ist hierbei in der horizontalen x-y-Ebene, das heißt, beim Fahren des Fahrzeugs auf einem Untergrund parallel zu diesem Untergrund, in dem Scheinwerfer 500 des Fahrzeugs angeordnet. Die Erfindung ist jedoch nicht auf eine derartige Anordnung beschränkt. Beispielsweise kann die erste und zweite Reihe 501, 502 von Scheinwerfermodulen 100 auch vertikal angeordnet sein oder es können andere Arten von Anordnungen, beispielsweise mit mehr Reihen von Scheinwerfermodulen 100 vorgesehen sein.

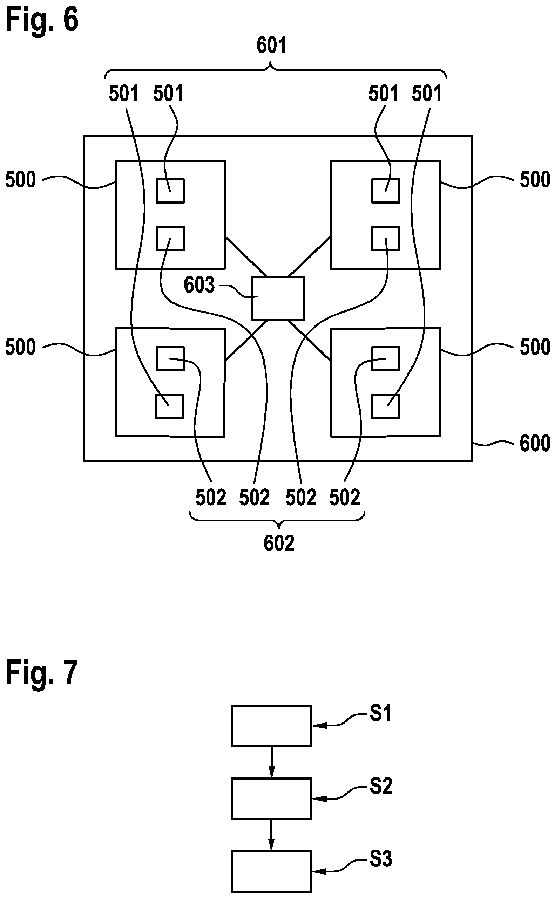

In Fig. 6 ist Blockschaltbild eines Scheinwerfersystems 600 für ein Fahrzeug illustriert. Das Scheinwerfersystem 600 umfasst vier Scheinwerfer 500, welche derart in dem Fahrzeug angeordnet sind, dass die Scheinwerfer 500 vorzugsweise eine komplette 360°-Fahrzeugumgebung des Fahrzeugs abrastern können. Die jeweils oberen Reihen 501 der Scheinwerfer 500 bilden eine erste Teilmenge 601 der Scheinwerfermodule 100 und die unteren Reihen 502 bilden eine zweite Teilmenge 602 der Scheinwerfermodule 100. Die Scheinwerfer 500 werden weiter über eine zentrale Steuereinrichtung 603 gesteuert.

Die Lichtdetektionseinrichtungen 102 der zweiten Teilmenge 602 der Scheinwerfermodule 100 ermitteln, wie oben erläutert, wenigstens eine Größe bezüglich einer räumlichen und/oder zeitlichen Intensitätsverteilung und/oder einer Wellenlängenverteilung eines reflektierten Teils des ersten Lichts 103. Anhand dieser ermittelten Größen kann die Steuereinrichtung 603 mindestens ein Objekt in der Fahrzeugumgebung des Fahrzeugs 600 ermitteln. Die Steuereinrichtung 603 ist weiter ausgebildet, die Scheinwerfermodule 100 der ersten Teilmenge 601 derart anzusteuern, dass mindestens ein erstes Licht 103 der Scheinwerfermodule 100 der ersten Teilmenge 601 einen dritten Raumwinkelbereich als mindestens einen Teilbereich der Fahrzeugumgebung abrastert, wobei sich das anhand der ermittelten Größen erkannte Objekt in dem dritten Raumwinkelbereich befindet. Mit anderen Worten dient die zweite Teilmenge 602 der Scheinwerfermodule 100 der Bereitstellung eines Überblickbildes, anhand dessen von der Steuereinrichtung 603 Objekte erkannt werden, und die zweite Reihe der Scheinwerfermodule 100 dient der Detailverfolgung, wodurch erkannte Objekte verfolgt, optisch erfasst und die erfassten Daten ausgewertet werden können. Die Steuereinrichtung 603 kann insbesondere ausgebildet sein, anhand von durch die Lichtdetektionseinrichtungen 102 der zweiten Teilmenge 602 ermittelten Größen das erkannte Objekt genauer zu bestimmen.

Fig. 7 zeigt ein Flussdiagramm zur Erläuterung eines Betriebsverfahrens für ein Scheinwerfermodul 100 gemäß einer Ausführungsform der vorliegenden Erfindung.

In einem ersten Schritt S1wird ein zumindest teilweise im sichtbaren Spektrum liegendes Licht in mindestens einen Teilbereich einer Fahrzeugumgebung des Fahrzeugs durch das Scheinwerfermodul 100 emittiert, wobei das Scheinwerfermodul 100 beispielsweise einer der oben beschriebenen Ausführungsformen entsprechen kann. Insbesondere kann das Scheinwerfermodul 100 eine in Fig. 1 gezeigte Lichtaussendeeinrichtung 101 aufweisen, welche dazu ausgelegt ist, ein erstes Licht 103 und ein zweites Licht 104 zu emittieren.

In einem zweiten Schritt S2 wird mindestens eine Größe bezüglich einer räumlichen und/oder zeitlichen Intensitätsverteilung und/oder einer Wellenlängenverteilung einer auf das Scheinwerfermodul 100 auftreffenden Reflexion des mindestens einen Teils des emittierten Lichts, beispielsweise des ersten Lichts 103, ermittelt.

In einem dritten Schritt S3 wird eine Information bezüglich der Fahrzeugumgebung unter Berücksichtigung der mindestens einen ermittelten Größe ermittelt.

## Patentansprüche

1. Scheinwerfermodul (100) für einen Scheinwerfer (500) eines Fahrzeugs, welches dazu ausgelegt ist, ein zumindest teilweise im sichtbaren Spektrum liegendes Licht in mindestens einen Teilbereich einer Fahrzeugumgebung des Fahrzeugs zu emittieren, mit:
einem Strahlteiler (207), wobei der Strahlteiler (207) ein Prisma ist;
einer ersten Abrastereinrichtung (206);
einer Konvertiereinrichtung (204); und
einer Laserlichtquelle (201; 401a, 401b), welche dazu ausgebildet ist, Laserlicht mit mindestens einer Ausgangswellenlänge zu emittieren, welches zumindest teilweise mittels des Strahlteilers (207) als erster Teilstahl auf die erste Abrastereinrichtung (206) und als zweiter Teilstrahl auf die Konvertiereinrichtung (204) gerichtet ist,
wobei das von dem Scheinwerfermodul (100) in den mindestens einen Teilbereich der Fahrzeugumgebung emittierte Licht ein mittels der ersten Abrastereinrichtung (206) abgelenktes erstes Licht (103) und ein mittels der Konvertiereinrichtung (204) spektral gestreutes zweites Licht (104) mit mindestens einer von der Ausgangswellenlänge abweichenden Wellenlänge umfasst; und
wobei das Scheinwerfermodul (100) eine Lichtdetektionseinrichtung (102) umfasst, welche dazu ausgelegt ist, mindestens eine Größe bezüglich einer räumlichen und/oder zeitlichen Intensitätsverteilung und/oder einer Wellenlängenverteilung einer auf das Scheinwerfermodul (100) auftreffenden Reflexion zumindest eines Teils des emittierten Lichts zu ermitteln und unter Berücksichtigung der mindestens einen ermittelten Größe eine Information bezüglich der Fahrzeugumgebung zu ermitteln.

2. Scheinwerfermodul nach Anspruch 1, wobei die erste Abrastereinrichtung (206) dazu ausgelegt ist, einen ersten Raumwinkelbereich (106) als mindestens einen Teilbereich der Fahrzeugumgebung mit dem ersten Licht abzurastern.

3. Scheinwerfermodul nach Anspruch 1 oder 2, mit einer zweiten Abrastereinrichtung (205), auf welche das mittels der Konvertiereinrichtung (204) spektral gestreute zweite Licht trifft und mittels welcher ein zweiter Raumwinkelbereich (107) mit dem spektral gestreuten zweiten Licht abrasterbar ist.

4. Scheinwerfermodul (100) nach Anspruch 3, wobei der erste Raumwinkelbereich (106) größer ist als der zweite Raumwinkelbereich (107).

5. Scheinwerfer (500) für ein Fahrzeug, mit mindestens einem Scheinwerfermodul (100) nach einem der Ansprüche 1 bis 4.

6. Scheinwerfersystem (500) für ein Fahrzeug, mit
mindestens einem Scheinwerfer (500) nach Anspruch 5; und
einer Steuereinrichtung (603), welche ausgebildet ist, den mindestens einen Scheinwerfer (500) zu steuern.

7. Scheinwerfersystem (500) nach Anspruch 6, wobei eine erste Teilmenge (601) der Scheinwerfermodule (100) des mindestens einen Scheinwerfers (500) dazu ausgelegt ist, anhand von den von Lichtdetektionseinrichtungen (102) einer zweiten Teilmenge (602) der Scheinwerfermodule (100) des mindestens einen Schweinwerfers (500) ermittelten Größen einen dritten Raumwinkelbereich als mindestens einen Teilbereich der Fahrzeugumgebung mit mindestens einem ersten Licht der Scheinwerfermodule (100) der ersten Teilmenge (601) abzurastern.

8. Betriebsverfahren für ein Scheinwerfermodul (100) nach einem der Ansprüche 1 bis 4, mit den Schritten:
Emittieren (S1) eines zumindest teilweise im sichtbaren Spektrum liegenden Lichts in mindestens einen Teilbereich einer Fahrzeugumgebung des Fahrzeugs durch das Scheinwerfermodul (100);
Ermitteln (S2) mindestens einer Größe bezüglich einer räumlichen und/oder zeitlichen Intensitätsverteilung und/oder einer Wellenlängenverteilung einer auf das Scheinwerfermodul (100) auftreffenden Reflexion zumindest eines Teils des emittierten Lichts; und
Ermitteln (S3) einer Information bezüglich der Fahrzeugumgebung unter Berücksichtigung der mindestens einen ermittelten Größe.

## Claims

1. Headlight module (100) for a headlight (500) of a vehicle, which is designed to emit light, of which at least a part lies in the visible spectrum, into at least one partial region of a vehicle environment of the vehicle, comprising:
a beam splitter (207), wherein the beam splitter (207) is a prism;
a first scanning device (206);
a converter device (204); and
a laser light source (201; 401a, 401b), which is configured to emit laser light having at least one output wavelength, which is at least partially directed by means of the beam splitter (207) as a first partial beam at the first scanning device (206) and as a second partial beam at the converter device (204),
wherein the light emitted by the headlight module (100) into the at least one partial region of the vehicle environment comprises a first light (103) deflected by the first scanning device (206) and a second light (104), which is spectrally scattered by the converter device (204) and has at least one wavelength deviating from the output wavelength; and
wherein the headlight module (100) comprises a light detection device (102), which is designed to determine at least one variable with respect to a spatial and/or temporal intensity distribution and/or a wavelength distribution of a reflection, incident on the headlight module (100), of at least part of the emitted light and, taking into account the at least one determined variable, to determine information regarding the vehicle environment.

2. Headlight module according to Claim 1, wherein the first scanning device (206) is designed to scan a first solid angle region (106) as at least one partial region of the vehicle environment with the first light.

3. Headlight module according to Claim 1 or 2, comprising a second scanning device (205), on which the second light spectrally scattered by the converter device (204) is incident and by means of which a second solid angle region (107) is scannable with the spectrally scattered second light.

4. Headlight module (100) according to Claim 3, wherein the first solid angle region (106) is larger than the second solid angle region (107).

5. Headlight (500) for a vehicle, comprising at least one headlight module (100) according to any of Claims 1 to 4.

6. Headlight system (500) for a vehicle, comprising
at least one headlight (500) according to Claim 5; and
a control device (603), which is configured to control the at least one headlight (500).

7. Headlight system (500) according to Claim 6, wherein a first subset (601) of the headlight modules (100) of the at least one headlight (500) is designed to scan, based on the variables determined by light detection devices (102) of a second subset (602) of the headlight modules (100) of the at least one headlight (500), a third solid angle region as at least one partial region of the vehicle environment with at least one first light from the headlight modules (100) of the first subset (601).

8. Operating method for a headlight module (100) according to any of Claims 1 to 4, comprising the steps of:
emitting (S1) light, at least a part of which lies in the visible spectrum, into at least one partial region of a vehicle environment of the vehicle by way of the headlight module (100);
determining (S2) at least one variable with respect to a spatial and/or temporal intensity distribution and/or a wavelength distribution of a reflection, incident on the headlight module (100), of at least part of the emitted light; and
determining (S3) information regarding the vehicle environment taking into account the at least one determined variable.

## Revendications

1. Module de phare (100) pour un phare (500) d'un véhicule, qui est conçu pour émettre au moins partiellement de la lumière située dans le spectre visible dans au moins une partie d'un environnement de véhicule dudit véhicule, comportant :
un séparateur de faisceau (207), le séparateur de faisceau (207) étant un prisme ;
un premier dispositif de balayage (206) ;
un dispositif de conversion (204) ; et
une source de lumière laser (201 ; 401a, 401b), qui est conçue pour émettre une lumière laser ayant au moins une longueur d'onde de sortie qui est dirigée au moins partiellement au moyen du séparateur de faisceau (207) en tant que premier faisceau partiel sur le premier dispositif de balayage (206) et en tant que deuxième faisceau partiel sur le dispositif de conversion (204),
dans lequel la lumière émise par le module de phare (100) dans ladite au moins une partie de l'environnement de véhicule comprend une première lumière (103) déviée au moyen du premier dispositif de balayage (206) et une deuxième lumière (104) diffusée spectralement au moyen du dispositif de conversion (204) ayant au moins une longueur d'onde différente de la longueur d'onde initiale ; et
dans lequel le module de phare (100) comprend un dispositif de détection de lumière (102), qui est conçu pour déterminer au moins une grandeur concernant une distribution d'intensité spatiale et/ou temporelle et/ou une distribution de longueur d'onde d'une réflexion d'au moins une partie de la lumière émise, incidente sur le module de phare (100), et pour déterminer des informations concernant l'environnement de véhicule en tenant compte de ladite au moins une grandeur déterminée.

2. Module de phare selon la revendication 1, dans lequel le premier dispositif de balayage (206) est conçu pour balayer une première zone d'angle solide (106) en tant qu'au moins une partie de l'environnement de véhicule avec la première lumière.

3. Module de phare selon la revendication 1 ou 2, comportant un deuxième dispositif de balayage (205) sur lequel est incidente la deuxième lumière diffusée spectralement au moyen du dispositif de conversion (204) et au moyen duquel une deuxième zone d'angle solide (107) peut être balayée avec la deuxième lumière diffusée spectralement.

4. Module de phare (100) selon la revendication 3, dans lequel la première zone d'angle solide (106) est plus grande que la deuxième zone d'angle solide (107).

5. Phare (500) pour un véhicule, comportant ledit au moins un module de phare (100) selon l'une quelconque des revendications 1 à 4.

6. Système de phare (500) pour un véhicule, comportant
au moins un phare (500) selon la revendication 5 ; et
un dispositif de commande (603), qui est conçu pour commander ledit au moins un phare (500).

7. Système de phare (500) selon la revendication 6, dans lequel un premier sous-ensemble (601) des modules de phare (100) dudit au moins un phare (500) est conçu pour balayer, sur la base des grandeurs déterminées par les dispositifs de détection de lumière (102) d'un deuxième sous-ensemble (602) des modules de phare (100) dudit au moins un phare (500), une troisième zone d'angle solide en tant qu'au moins une partie de l'environnement de véhicule avec au moins une première lumière des modules de phare (100) du premier sous-ensemble (601).

8. Procédé pour faire fonctionner un module de phare (100) selon l'une quelconque des revendications 1 à 4, comportant les étapes consistant à :
émettre (S1) au moins partiellement de la lumière située dans le spectre visible dans au moins une partie d'un environnement de véhicule dudit véhicule au moyen du module de phare (100) ;
déterminer (S2) au moins une grandeur concernant une distribution d'intensité spatiale et/ou temporelle et/ou une distribution de longueur d'onde d'une réflexion d'au moins une partie de la lumière émise, incidente sur le module de phare (100) ; et
déterminer (S3) des informations concernant l'environnement de véhicule en tenant compte de ladite au moins une grandeur déterminée.
